# EUROPEAN PATENT APPLICATION

(11) **EP 4 692 584 A1**
(43) Date of publication of application: **11.02.2026**
(21) Application number: 24779535.4
(22) Date of filing: 14.03.2024
(51) Int. Cl.: F16D 3/84

(54) **ATTACHMENT STRUCTURE FOR CONSTANT-VELOCITY UNIVERSAL JOINT BOOT**

(30) Priority: 24.03.2023 JP 2023048061; 11.03.2024 JP 2024036819
(71) Applicant: NTN Corporation, Osaka-shi, Osaka 530-0005 (JP)
(72) Inventor: KONDO, Rina, Iwata-shi Shizuoka 438-8510 (JP); KONOMOTO, Takeyoshi, Iwata-shi Shizuoka 438-8510 (JP); IZUMINO, Junichi, Iwata-shi Shizuoka 438-8510 (JP)
(74) Representative: Grünecker Patent- und Rechtsanwälte PartG mbB
(86) International application number: PCT/JP2024/010089
(87) International publication number: WO 2024/203406

(57) **Abstract**

In a boot attachment structure, by fitting an annular projection 26 provided on an inner peripheral surface of a large-diameter cylindrical portion 21 (fixing portion A) of a boot 20 to a first annular groove 8 provided on an outer peripheral surface 6a of a boot target fixing portion B of an outer joint member 2 and tightening an outer peripheral surface of the fixing portion A with a boot band 24 in a state where annular protrusions 10 provided on both axial sides of the first annular groove 8 are pressed against the inner peripheral surface of the fixing portion A, the fixing portion A is attached and fixed to the boot target fixing portion B. On the outer peripheral surface of the boot target fixing portion B, a support portion 11 in contact with and supporting an inner peripheral surface 21a of the fixing portion A outside the band width range of the boot band 24 is provided, and the support portion 11 is disposed on both axial sides of the boot band 24.

## Description

### TECHNICAL FIELD

The present invention relates to an attachment structure for a cylindrical boot (constant-velocity universal joint boot) formed of an elastic material such as rubber or resin and used as a seal member of a constant velocity universal joint.

### BACKGROUND ART

As is well known, an automobile in which a drive source such as an engine or an electric motor is mounted on a chassis includes a power transmission device for transmitting an output of the drive source to the drive wheels. As this type of power transmission device, for example, there is a drive shaft including a fixed type constant velocity universal joint and a sliding type constant velocity universal joint that are disposed apart from each other in the vehicle width direction of an automobile, and a shaft member that connects inner joint members of the two constant velocity universal joints so as to be able to transmit torque.

In the drive shaft described above, a cylindrical boot (constant-velocity universal joint boot) formed of an elastic material such as rubber or resin and functioning as a seal member is provided between the shaft member and the outer joint member of the fixed type constant velocity universal joint and between the shaft member and the outer joint member of the sliding type constant velocity universal joint. A cylindrical fixing portion is provided at each of end portions on one side and the other side in the axial direction of the boot, and these fixing portions are attached and fixed to boot target fixing portions provided in each of the outer joint member and the shaft member which are attachment target members of the boot, for example, by being tightened with a metal belt-shaped member called a boot band. This prevents external leakage of a lubricant filled in the joint and intrusion of foreign matter into the joint.

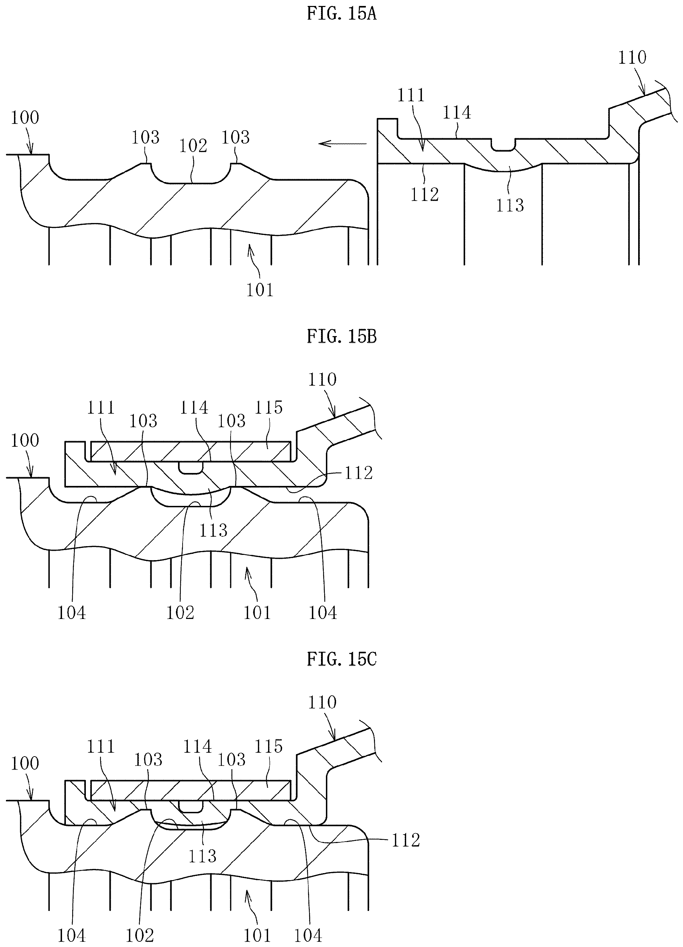

As illustrated in FIGS. 15A to 15C, Patent Literature 1 below discloses a boot attachment structure in which an annular protrusion 113 provided on an inner peripheral surface 112 of a fixing portion 111 of a boot 110 is fitted into an annular groove 102 provided on an outer peripheral surface of a boot target fixing portion 101 of an outer joint member 100, and the fixing portion 111 is tightened by a boot band 115. An annular protrusion 103 is provided on both axial sides (one side and other side in axial direction) of the annular groove 102 of the boot target fixing portion 101, and when a groove bottom surface of a band groove 114 provided on an outer peripheral surface of the fixing portion 111 of the boot 110 is tightened with the boot band 115 after the fixing portion 111 of the boot 110 is disposed on the outer periphery of the boot target fixing portion 101 of the outer joint member 100 (see FIG. 15B), the fixing portion 111 of the boot 110 is elastically radially reduced and the annular protrusion 103 bites into the inner peripheral surface 112 of the fixing portion 111 of the boot 110 (see FIG. 15C). As a result, it is possible to enhance the pull-out strength and the sealing property of the fixing portion 111 of the boot 110.

### CITATIONS LIST

### PATENT LITERATURE

Patent Literature 1: JP 3333310 B2

### SUMMARY OF INVENTION

### TECHNICAL PROBLEMS

In the boot attachment structure described above, the height of the annular protrusion 103 is preferably set so that the annular protrusion 103 reliably bites into the inner peripheral surface 112 of the fixing portion 111 and the inner peripheral surface 112 of the fixing portion 111 comes into close contact with an outer peripheral surface 104 of the boot target fixing portion 101 of the outer joint member 100 when the boot band 115 is tightened. In order to implement such an attachment structure, it is necessary to strongly tighten the fixing portion 111 of the boot 110 with the boot band 115. However, due to the structure of the constant velocity universal joint, it may be difficult to strongly tighten the fixing portion 111 of the boot 110 (it may be necessary to use boot band 115 having weak tightening force). In such a case, the attached state illustrated in FIG. 15C cannot be achieved, and the following problems easily occur.

First, the outer diameter of the annular protrusion 103 provided on the boot target fixing portion 101 is generally set to be larger than the inner diameter of the fixing portion 111 so that the annular protrusion 103 is press-fitted (pressed) into the inner peripheral surface 112 of the fixing portion 111 of the boot 110 when the fixing portion 111 is disposed on the outer periphery of the boot target fixing portion 101. If the outer diameter of the annular protrusion 103 is equal to or smaller than the inner diameter of the fixing portion 111, when the fixing portion 111 of the boot 110 is tightened with the boot band 115, the fixing portion 111 of the boot 110 is wrinkled, the contact surface pressure of the fixing portion 111 with respect to the boot target fixing portion 101 is locally lowered, and it becomes difficult to secure a desired sealing property.

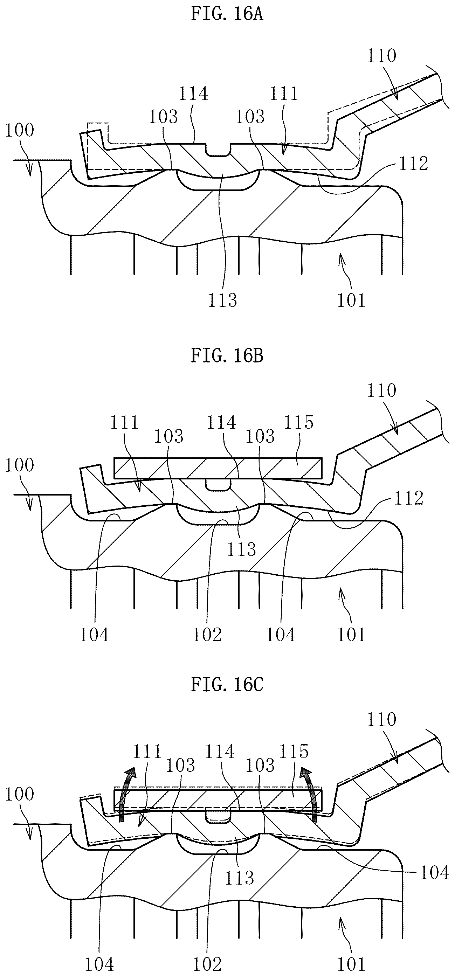

When the fixing portion 111 of the boot 110 is disposed on the outer periphery of the boot target fixing portion 101 under the dimensional relationship in which the outer diameter of the annular protrusion 103 is set to be larger than the inner diameter of the fixing portion 111 of the boot 110, the fixing portion 111 of the boot 110 is elastically deformed into a "drum-shaped" form in which the axial center portion is located radially outside both axial ends as indicated by a solid line in FIG. 16A. Even if (groove bottom surface of band groove 114 provided on outer peripheral surface of) the fixing portion 111 of the boot 110 is tightened with the boot band 115 in this state, if the tightening force of the boot band 115 is weak, as illustrated in FIGS. 16B and 16C, it is difficult for the boot band 115 to bring substantially the entire band width into contact with the groove bottom surface of the band groove 114.

Then, when the constant velocity universal joint rotates while maintaining the operating angle, as (bellows portion provided in) the axial center region of the boot 110 repeatedly bends and stretches, a force as indicated by a black arrow in FIG. 16C acts on the boot band 115 tightening the fixing portion 111. Therefore, if the tightening force of the boot band 115 is insufficient, the boot band 115 is tilted with respect to the axial direction, and as a result, a decrease in the contact force of the annular protrusion 103 with respect to the fixing portion 111 of the boot 110, a decrease in the sealing property due to a positional shift of the boot band 115 in the axial direction, and the like are caused.

Therefore, a main object of the present invention is to secure a high sealing property even when a tightening force of a boot band is somewhat weak in a boot attachment structure in which a fixing portion of a boot is attached and fixed to a boot target fixing portion of an attachment target member by tightening the boot band.

### SOLUTIONS TO PROBLEMS

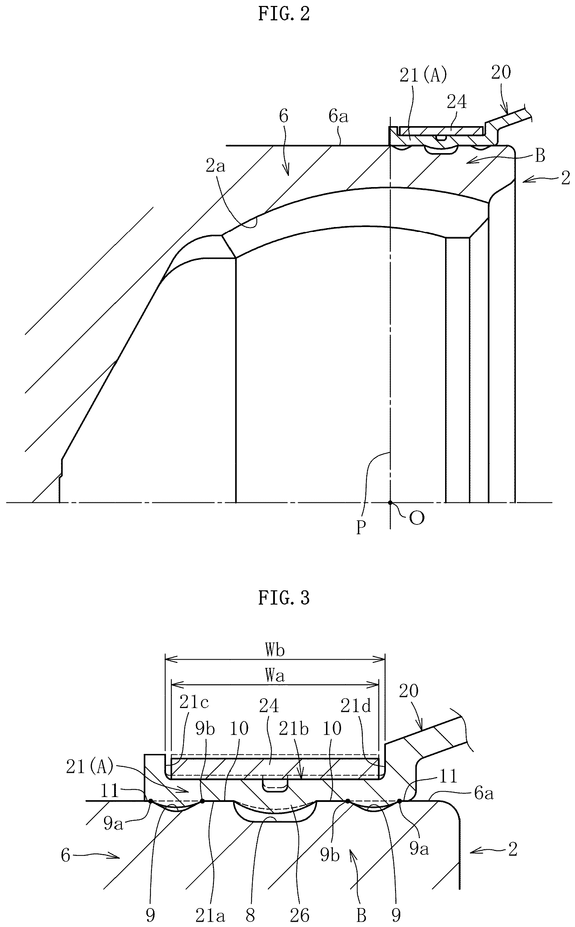

The present invention devised to achieve the above object is an attachment structure for a constant-velocity universal joint boot in which an annular projection provided on an inner peripheral surface of a fixing portion of the constant-velocity universal joint boot formed in a cylindrical shape using an elastic material is fitted into a first annular groove provided on an outer peripheral surface of a boot target fixing portion of a boot attachment target member, and a band groove provided on an outer peripheral surface of the fixing portion is tightened with a boot band in a state where annular protrusions provided on both axial sides of the first annular groove in the outer peripheral surface of the boot target fixing portion are pressed against the inner peripheral surface of the fixing portion, to attach and fix the fixing portion to the boot target fixing portion, and a support portion is provided on the outer peripheral surface of the boot target fixing portion, the support portion in contact with and supporting the inner peripheral surface of the fixing portion outside a band width range of the boot band, and the support portion is disposed on both axial sides of the boot band. Note that "outside the bandwidth range of the boot band" is the outside of "(range of) the bandwidth of the boot band" indicated by a symbol Wa in FIG. 3.

If the support portion as described above is provided on both sides in the axial direction of the boot band (one side and the other side in axial direction of boot band, respectively) of the outer peripheral surface of the boot target fixing portion, the ends on one side and the other side in the axial direction of the inner peripheral surface of the fixing portion of the constant-velocity universal joint boot(hereinafter also simply referred to as a "boot") can be brought into contact with and supported. Therefore, when the fixing portion of the boot is disposed on the outer periphery of the boot target fixing portion of the boot attachment target member, or when the fixing portion of the boot is elastically reduced in diameter due to tightening of the boot band, it is possible to prevent the outer peripheral surface of the fixing portion of the boot from forming a "drum-like" shape as illustrated in FIG. 16A and the like and to hold the outer peripheral surface of the fixing portion in a cylindrical surface with a constant diameter. In this case, even if the tightening force of the boot band is somewhat weak, the entire inner peripheral surface of the boot band including both ends of the boot band in the band width direction can be brought into contact with the groove bottom surface of the band groove provided on the outer peripheral surface of the fixing portion of the boot after tightening the boot band. Therefore, even if a force that tilts the boot band with respect to the axial direction acts on the boot band, the boot band is hardly inclined with respect to the axial direction, and the boot band is hardly displaced in the axial direction. Accordingly, the close contact (contact) state between the inner peripheral surface of the fixing portion of the boot and the outer peripheral surface of the boot target fixing portion of the boot attachment target member can be prevented from being released, and a high sealing property can be secured.

When the support portion is provided on the outer peripheral surface of the boot target fixing portion, a second annular groove can be provided between the annular protrusion and the support portion on the outer peripheral surface of the boot target fixing portion. In this case, when the outer peripheral surface of the fixing portion of the boot is tightened with the boot band, a part of the thickness (specifically, thickness of portion of fixing portion facing second annular groove) of the fixing portion can enter the second annular groove. In particular, when one end and the other end of the second annular groove in the groove width direction are disposed outside and within the band width range of the boot band, respectively, a part of the thickness of the fixing portion flowing with tightening of the boot band can be released to the outside in the band width direction of the boot band. As a result, since the reaction force (elastic restoring force) generated in the fixing portion along with the tightening of the boot band can be reduced, the tightening property of the boot band can be enhanced.

In addition, when the second annular groove is provided on the outer peripheral surface of the boot target fixing portion, one end and the other end of the annular groove in the groove width direction are preferably disposed outside and within the groove width range of the band groove, respectively. In this way, since the contact mode between the inner peripheral surface of the fixing portion of the boot and the outer peripheral surface of the boot target fixing portion can be optimized, it is possible to prevent deterioration in the sealing property.

In the above configuration, in a state where the outer peripheral surface of the fixing portion of the boot is not tightened with the boot band, when an axial width of the annular projection is W, a groove width of the first annular groove is W1 and a groove width of the second annular groove is W2, a relational expression of W2 < W < W1 may be satisfied. In this way, when the fixing portion of the boot is mounted on the outer periphery of the boot target fixing portion of the boot attachment target member, the annular projection provided on the inner periphery of the fixing portion can be prevented from being erroneously fitted into the second annular groove, and the annular projection can be correctly fitted into the first annular groove. When the annular projection is fitted into the first annular groove, relative positioning between the boot and the attachment target member in the axial direction can be completed, so that the boot band can be easily tightened with high accuracy.

In the above configuration, in a state where the outer peripheral surface of the fixing portion of the boot is not tightened with the boot band, when an axial width of the annular projection is W, a groove width of the first annular groove is W1 and a groove width of the second annular groove is W2, a relational expression of W2 < W1 < W may be satisfied. In this way, the close contact between the boot and the attachment target member thereof can be enhanced, and the effect of improving the sealing property can be expected.

In order to suppress the reaction force generated in the fixing portion of the boot due to the tightening of the boot band and enhance the tightening property of the boot band, it is preferable that the annular projection is not in contact with the groove bottom of the first annular groove and the inner peripheral surface of the fixing portion of the boot is not in contact with the groove bottom of the second annular groove.

In the above configuration, the outer diameter of the support portion may be set to be (slightly) larger than the outer diameter of the annular protrusion. In this way, when a plurality of the outer joint members (outer joint members to which boot is not attached) provided with the annular protrusion and the like are transported together, the possibility of the annular protrusions of two adjacent outer joint members coming into contact with each other and a defect such as a scratch occurring in the annular protrusion can be reduced.

In addition to the first annular groove to which the annular projection provided in the fixing portion of the boot is fitted, a second annular groove disposed between the annular protrusion and the support portion can be provided on the outer peripheral surface of the boot target fixing portion. In this case, at least one of the first annular groove and the second annular groove can be formed to have a cross-sectional shape of a V-shape that is plane-symmetric on an axis orthogonal plane passing through a central portion of the annular groove in the groove width direction.

In the boot attachment structure according to the present invention, the boot attachment target member may be provided with a mark that enables visual determination of correct axial positioning of the fixing portion of the boot with respect to the boot target fixing portion. As a result, the boot can be easily and accurately attached to the attachment target member.

The boot target fixing portion can be provided on an outer joint member of the constant velocity universal joint or a shaft member connected to the inner joint member of the constant velocity universal joint in a torque-transmittable manner. That is, the present invention can be applied not only to the a boot attachment structure for an outer joint member but also to a boot attachment structure for a shaft member. Note that the outer joint member may have a bottomed bowl-shaped cup portion in which a plurality of track grooves extending in the axial direction are formed on the inner peripheral surface, and a boot target fixing portion may be provided at a position shifted toward the opening side from the joint center in the cup portion.

In addition, the present invention can be applied regardless of whether the elastic material forming the boot is a rubber material or a resin material, that is, whether the boot is a so-called rubber boot or a resin boot.

### ADVANTAGEOUS EFFECTS OF INVENTION

As described above, according to the present invention, in a boot attachment structure for a constant-velocity universal joint boot in which a fixing portion of the boot is attached and fixed to a boot target fixing portion of the attachment target member by tightening a boot band, it is possible to secure a high sealing property even when the tightening force of the boot band is somewhat weak.

### BRIEF DESCRIPTION OF DRAWINGS

FIG. 1 is a longitudinal sectional view of a constant velocity universal joint adopting a boot attachment structure according to an embodiment of the present invention.
FIG. 2 is an enlarged view illustrating a part of an outer joint member and a boot of the constant velocity universal joint illustrated in FIG. 1.
FIG. 3 is a partially enlarged view of FIG. 2.
FIG. 4A is a diagram illustrating a state before the boot is attached to the outer joint member.
FIG. 4B is a diagram illustrating a state in which a fixing portion of the boot is disposed on the outer periphery of a boot target fixing portion of the outer joint member.
FIG. 4C is a diagram illustrating a state after the fixing portion of the boot is disposed on the outer periphery of the boot target fixing portion and before a boot band is tightened.
FIG. 4D is a diagram illustrating a state in which the boot band is being tightened.
FIG. 5 is an enlarged cross-sectional view of a boot attachment structure not adopting the present invention.
FIG. 6A is a diagram illustrating a boot target fixing portion of an outer joint member in a boot attachment structure according to another embodiment of the present invention.
FIG. 6B is a diagram illustrating a state in which the fixing portion of the boot disposed on the outer periphery of the boot target fixing portion illustrated in FIG. 6A is tightened with a boot band.
FIG. 7A is a diagram illustrating a boot target fixing portion of an outer joint member in a boot attachment structure according to another embodiment of the present invention.
FIG. 7B is a diagram illustrating a state in which the fixing portion of the boot disposed on the outer periphery of the boot target fixing portion illustrated in FIG. 7A is tightened with a boot band.
FIG. 8A is a plan view of a one-touch band before tightening.
FIG. 8B is a plan view of the one-touch band after tightening.
FIG. 9A is a plan view of an omega band before clamping.
FIG. 9B is a plan view of the omega band after clamping.
FIG. 10A is a plan view of a low profile band before tightening.
FIG. 10B is a plan view of the low profile band after tightening.
FIG. 11 is an enlarged cross-sectional view of a portion where a step is provided in a boot target fixing portion of an outer joint member in a boot attachment structure according to another embodiment of the present invention.
FIG. 12 is a cross-sectional view illustrating a state in which the fixing portion of the boot is positioned at an incorrect axial position with respect to the boot target fixing portion.
FIG. 13A is a cross-sectional view conceptually illustrating an outer joint member provided with a mark in the boot attachment structure according to the embodiment of the present invention.
FIG. 13B is a cross-sectional view conceptually illustrating an outer joint member provided with a mark in the boot attachment structure according to the embodiment of the present invention.
FIG. 13C is a cross-sectional view conceptually illustrating an outer joint member provided with a mark in the boot attachment structure according to the embodiment of the present invention.
FIG. 13D is a cross-sectional view conceptually illustrating an outer joint member provided with a mark in the boot attachment structure according to the embodiment of the present invention.
FIG. 14A is a diagram illustrating a boot fixing portion and a boot target fixing portion of an outer joint member adopted to implement a boot attachment structure according to another embodiment of the present invention.
FIG. 14B is a diagram conceptually illustrating a state immediately before the fixing portion illustrated in FIG. 14A is tightened with a boot band.
FIG. 15A is a schematic cross-sectional view for describing a conventional boot attachment structure, and is a diagram illustrating a state before a fixing portion of a boot is disposed on the outer periphery of a boot target fixing portion.
FIG. 15B is a diagram illustrating a state after the fixing portion of the boot is disposed on the outer periphery of the boot target fixing portion illustrated in FIG. 15 A and before tightening a boot band.
FIG. 15C is a diagram illustrating a state in which the fixing portion of the boot is tightened with the boot band.
FIG. 16A is a schematic cross-sectional view for explaining a problem of the conventional boot attachment structure, and is a diagram illustrating a state in which a fixing portion of a boot is disposed on the outer periphery of a boot target fixing portion.
FIG. 16B is a diagram illustrating a state before the fixing portion of the boot is tightened with the boot band.
FIG. 16C is a diagram illustrating a state in which the fixing portion of the boot is tightened with the boot band.

### DESCRIPTION OF EMBODIMENTS

Hereinafter, embodiments of the present invention will be described with reference to the drawings.

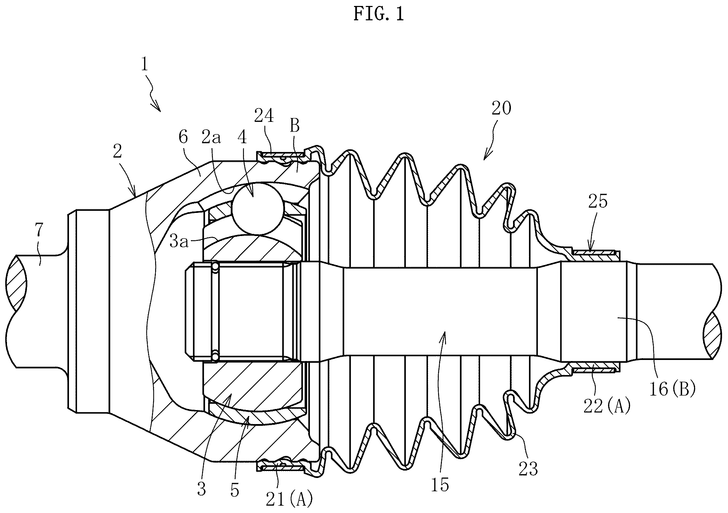

FIG. 1 is a longitudinal sectional view of a constant velocity universal joint (constant velocity universal joint with boot) employing a boot attachment structure according to an embodiment of the present invention, and more specifically, is a longitudinal sectional view of the constant velocity universal joint in a state where the operating angle is 0°. A constant velocity universal joint 1 illustrated in the drawing is a fixed type constant velocity universal joint that allows only relative angular displacement of two shafts (drive shaft and driven shaft) to be connected, and includes an outer joint member 2, an inner joint member 3, a plurality of balls 4, and a cage 5. The fixed type constant velocity universal joint 1 constitutes, for example, a drive shaft of an automobile together with a sliding type constant velocity universal joint (not illustrated) and the like, and is disposed on the drive wheel side (outboard side) in a state where the drive shaft is incorporated in the automobile. Note that in FIG. 1, the left side of the drawing is the outboard side, and the right side of the drawing is the inboard side. In the following description, the outboard side is also referred to as "one side in the axial direction", and the inboard side is also referred to as "the other side in the axial direction".

The outer joint member 2 integrally includes a bottomed bowl-shaped cup portion 6 and a shaft portion 7 extending from the bottom portion of the cup portion 6 toward one side in the axial direction. On the inner peripheral surface (spherical inner peripheral surface) of the cup portion 6, a plurality of arc-shaped outer track grooves 2a are formed at equal intervals in the circumferential direction. Although not illustrated, the internal space of the cup portion 6 is filled with a lubricant such as grease.

The inner joint member 3 has a spherical outer peripheral surface, and a plurality of arc-shaped inner track grooves 3a paired with the outer track grooves 2a of the outer joint member 2 are formed on the spherical outer peripheral surface at equal intervals in the circumferential direction. The inner joint member 3 has a shaft hole opened in both end surfaces thereof, and an end on one side in the axial direction of a shaft member 15 is spline-fitted to the shaft hole. An annular groove is formed on an outer peripheral surface of the shaft member 15, and a snap ring is attached to the annular groove. The shaft member 15 is prevented from coming off from the inner joint member 3 by axially engaging the snap ring with the inner joint member 3.

The ball 4 is interposed between the pair of outer track groove 2a and inner track groove 3a to transmit torque between the joint members 2 and 3. The annular cage 5 disposed between the spherical inner peripheral surface of the outer joint member 2 and the spherical outer peripheral surface of the inner joint member 3 holds the plurality of balls 4 at intervals in the circumferential direction.

Between the outer joint member 2 and the shaft member 15, a boot (constant-velocity universal joint boot) 20 that is formed in a cylindrical shape using a resin material mainly made of a thermoplastic elastomer and functions as a seal member is provided. The boot 20 is formed in a predetermined shape by blow molding such as press blow, and integrally includes a large-diameter cylindrical portion 21 provided at an end on one side in the axial direction and attached and fixed to the cup portion 6 of the outer joint member 2, a small-diameter cylindrical portion 22 provided at an end on the other side in the axial direction and attached and fixed to a large-diameter portion 16 of the shaft member 15, and a bellows portion 23 provided between the large-diameter cylindrical portion 21 and the small-diameter cylindrical portion 22. The bellows portion 23 elastically bends and stretches as the outer joint member 2 and (shaft member 15 connected to) the inner joint member 3 are relatively angularly displaced.

The large-diameter cylindrical portion 21 of the boot 20 is attached and fixed to the cup portion 6 of the outer joint member 2 by tightening (groove bottom surface of annular band groove 21b provided on) an outer peripheral surface of the large-diameter cylindrical portion 21 with a boot band 24. Additionally, the small-diameter cylindrical portion 22 of the boot 20 is attached and fixed to the large-diameter portion 11 of the shaft member 10 by tightening (groove bottom surface of annular band groove provided on) an outer peripheral surface of the small-diameter cylindrical portion 22 with a boot band 25. By attaching the boot 20 to the outer joint member 2 and the shaft member 11 in the above manner, external leakage of the lubricant filled in the internal space (inside of joint) of the cup portion 6 and intrusion of foreign matter into the inside of the joint are prevented as much as possible.

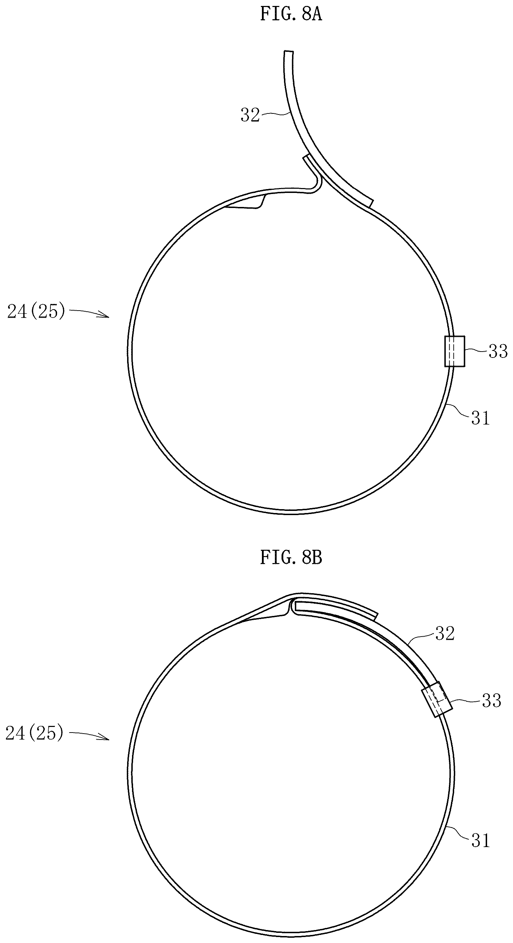

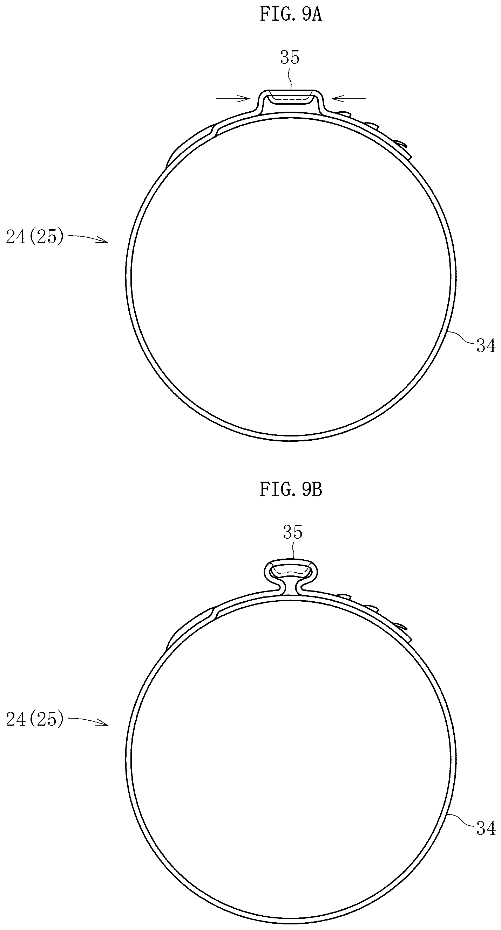

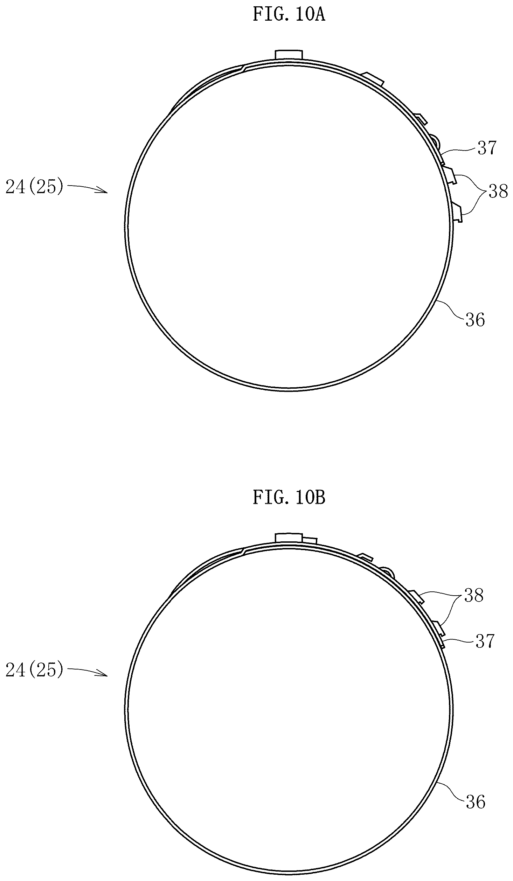

As the boot bands 24 and 25, for example, a known band such as a one-touch band illustrated in FIGS. 8A and 8B, an omega band illustrated in FIGS. 9A and 9B, or a low profile band illustrated in FIGS. 10A and 10B can be used. As the boot bands 24 and 25, the same type of boot band may be used, or different types of boot bands may be used.

A one-touch band is a band in which the diameter of an annular band body 31 is reduced by collapsing (folding) a lever member 32 along the band body 31, and then the tightening force is generated by fixing the superimposed lever member 32 and band body 31 with a stopper 33. Since the tightening force of the band is determined by the inner diameter of the band body 31, it cannot be basically adjusted. An omega band is a band in which a tightening force is generated by swaging a clamp portion 35 of a band main body 34 in an annular rounded state into an omega (Ω) shape, and the tightening force of the band can be adjusted according to the swaging amount of the clamp portion 35. A low profile band is a band in which a tightening force is generated by hooking and locking one end 37 of a band main body 36 to a hook portion 38 provided on the outer periphery of the band main body 36. Since the tightening force of the band is determined by the inner diameter of the band main body 36 similarly to the one-touch band, it cannot be basically adjusted.

In the constant velocity universal joint 1, the boot attachment structure according to the embodiment of the present invention is applied to the attachment of the large-diameter cylindrical portion 21 of the boot 20 to the cup portion 6 of the outer joint member 2. Therefore, the large-diameter cylindrical portion 21 of the boot 20 corresponds to the "fixing portion (A)" in the present invention, and a portion of the cup portion 6 to which the large-diameter cylindrical portion 21 is attached and fixed corresponds to the "boot target fixing portion (B)" in the present invention. Hereinafter, the boot attachment structure according to the embodiment of the present invention will be described in detail with reference to FIGS. 2 to 4.

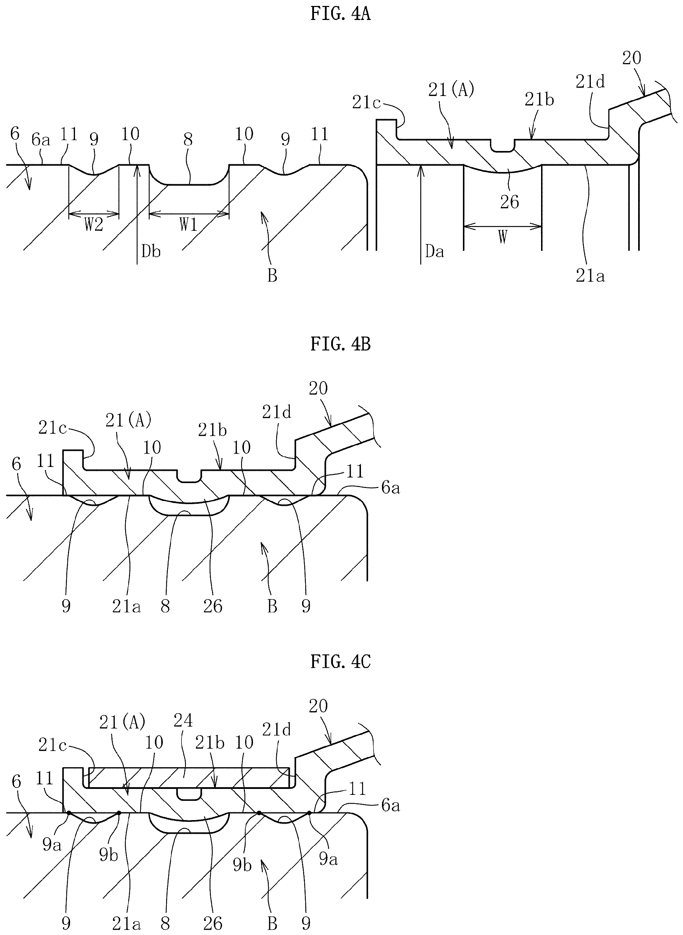

First, as illustrated in FIGS. 3 and 4A, an annular projection 26 protruding toward the inner diameter side is provided on an inner peripheral surface 21a of the large-diameter cylindrical portion 21 of the boot 20. No projection or recess other than the annular projection 26 is provided on the inner peripheral surface of the large-diameter cylindrical portion 21, and the inner peripheral surface of the large-diameter cylindrical portion 21 is formed as a cylindrical surface having a constant diameter except for the portion where the annular projection 26 is provided. In addition, an annular band groove 21b that accommodates the boot band 24 is provided on an outer peripheral surface of the large-diameter cylindrical portion 21. A separation distance (groove width of band groove 21b) Wb between inner wall surfaces 21c and 21d forming the band groove 21b is set to be larger than a band width Wa of the boot band 24 by a predetermined amount (Wb > Wa).

As illustrated in FIG. 4A, on an outer peripheral surface 6a of a boot target fixing portion B provided in the cup portion 6, a first annular groove 8 and two second annular grooves 9 arranged on both axial sides of the first annular groove 8 are formed at intervals in the axial direction. A groove width W1 of the first annular groove 8 is larger than a groove width W2 of the second annular groove 9 (W1 > W2), and the groove depth of the first annular groove 8 is larger than the groove depth of the second annular groove 9. An axial region between the first annular groove 8 and the two second annular grooves 9 is an annular protrusion 10 protruding to the outer diameter side from the annular grooves 8 and 9. In the present embodiment, since the outer diameter end of the annular protrusion 10 is constituted by the outer peripheral surface 6a of the cup portion 6, the outer diameter end of the annular protrusion 10 is located at the same radial position as the outer peripheral surface 6a of the cup portion 6. An outer diameter Db of the annular protrusion 10 is set to be larger than an inner diameter Da of the inner peripheral surface 21a of the large-diameter cylindrical portion 21 of the boot 20 by a predetermined amount (Db > Da).

As illustrated in FIGS. 3, 4C, and the like, the two annular protrusions 10 are provided so as to be entirely disposed within the range of the band width Wa of the boot band 24 that tightens the large-diameter cylindrical portion 21 (and groove width Wb of band groove 21b that accommodates boot band 24). On the other hand, each of the second annular grooves 9 is provided such that one end 9a in the groove width direction is disposed outside the range of the band width Wa of the boot band 24 (and groove width Wb of band groove 21b) and the other end 9b in the groove width direction is disposed within the range of the band width Wa of the boot band 24 (and groove width Wb of band groove 21b).

The outer peripheral surface 6a of the boot target fixing portion B is provided with a support portion 11 that comes into contact with and supports the inner peripheral surface 21a of the large-diameter cylindrical portion 21 of the boot 20 outside the range of the band width Wa of the boot band 24, and the support portion 11 is disposed on both axial sides of the boot band 24. In the present embodiment, the support portion 11 on one side is configured by the outer peripheral surface 6a of the cup portion 6 continuous with the second annular groove 9 on one side in the axial direction, and the support portion 11 on the other side is configured by the outer peripheral surface 6a of the cup portion 6 continuous with the second annular groove 9 on the other side in the axial direction. Accordingly, in the present embodiment, when the first annular groove 8 and the two second annular grooves 9 having a predetermined groove width and groove depth are formed at predetermined positions in the axial direction of the outer peripheral surface 6a of the cup portion 6, the two annular protrusions 10 and the two support portions 11 are obtained at the same time. The first annular groove 8 and the second annular groove 9 are formed by, for example, turning, which is a type of machining.

Then, as illustrated in FIG. 4A, after the large-diameter cylindrical portion 21 of the boot 20 and the cup portion 6 of the outer joint member 2 having the above configuration are coaxially arranged, both are relatively moved close to each other, and as illustrated in FIG. 4B, the large-diameter cylindrical portion 21 of the boot 20 as a fixing portion A is disposed on the outer periphery of the boot target fixing portion B of the cup portion 6. At this time, (the entire) annular projection 26 provided on the inner peripheral surface 21a of the large-diameter cylindrical portion 21 is fitted into the first annular groove 8 provided in the boot target fixing portion B. Therefore, an axial width W of the annular projection 26 (axial width W of annular projection 26 before tightening boot band 24) is set to be smaller than the groove width W1 of the first annular groove 8 (W < W1), but is set larger than the groove width W2 of the second annular groove 9 (W > W2). That is, the widths are set such that the relational expression (inequality) of W2 < W < W1 is satisfied. In this case, when the large-diameter cylindrical portion 21 (fixing portion A) of the boot 20 is disposed on the outer periphery of the boot target fixing portion B of the cup portion 6, the entire annular projection 26 can be prevented from being fitted into the second annular groove 9. Therefore, relative positioning of the fixing portion A in the axial direction with respect to the boot target fixing portion B can be accurately performed.

In addition, since the outer diameter Db of the annular protrusion 10 provided on the boot target fixing portion B of the cup portion 6 is larger than the inner diameter Da of the inner peripheral surface 21a of the large-diameter cylindrical portion 21 of the boot 20 (Db > Da), when the large-diameter cylindrical portion 21 of the boot 20 is disposed on the outer periphery of the boot target fixing portion B, the annular protrusion 10 is pressed against the inner peripheral surface 21a of the large-diameter cylindrical portion 21 of the boot 20.

As described above, after the large-diameter cylindrical portion 21 of the boot 20 is disposed on the outer periphery of the boot target fixing portion B of the cup portion 6, the boot band 24 is disposed on the outer periphery of the large-diameter cylindrical portion 21 as illustrated in FIG. 4C, and (groove bottom surface of band groove 21b provided in) the outer peripheral surface of the large-diameter cylindrical portion 21 is tightened by the boot band 24.

In the present embodiment, as illustrated in FIG. 3, the support portion 11 that comes into contact with and supports the inner peripheral surface 21a of the large-diameter cylindrical portion 21 of the boot 20 outside the range of the band width Wa of the boot band 24 is provided on the outer peripheral surface of the boot target fixing portion B provided in the cup portion 6 of the outer joint member 2, and the support portions 11 are arranged on both sides in the axial direction of the boot band 24 and support the ends on one side and the other side in the axial direction of the inner peripheral surface 21a of the large-diameter cylindrical portion 21. According to such a configuration, when the large-diameter cylindrical portion 21 of the boot 20 is disposed on the outer periphery of the boot target fixing portion B of the cup portion 6 (see FIG. 4B), it is possible to prevent the outer peripheral surface of the large-diameter cylindrical portion 21 of the boot 20 (groove bottom surface of band groove 21b) from having a "drum-like" shape as illustrated in FIG. 16A and the like as much as possible, and to hold the outer peripheral surface of the large-diameter cylindrical portion 21 in a cylindrical surface shape with a constant diameter.

In this case, even if the tightening force of the boot band 24 is somewhat weak, the entire inner peripheral surface of the boot band 24 can be brought into contact with the outer peripheral surface of the large-diameter cylindrical portion 21 including both ends of the boot band 24 in the band width direction after tightening the boot band 24. Therefore, even if a force that tilts the boot band 24 with respect to the axial direction acts on the boot band 24, the boot band 24 is less likely to tilt with respect to the axial direction or to shift in position in the axial direction. Therefore, not only in a case where the omega band illustrated in FIGS. 9A and 9B is used as the boot band 24, but also in a case where the one-touch band illustrated in FIGS. 8A and 8B or the low profile band illustrated in FIGS. 10A and 10B, which is difficult to obtain a high tightening force as compared with the omega band, is used, the inner peripheral surface 21a of the large-diameter cylindrical portion 21 of the boot 20 and the outer peripheral surface of the boot target fixing portion B of the cup portion 6 can be appropriately brought into close contact with each other, and a required high sealing property can be secured.

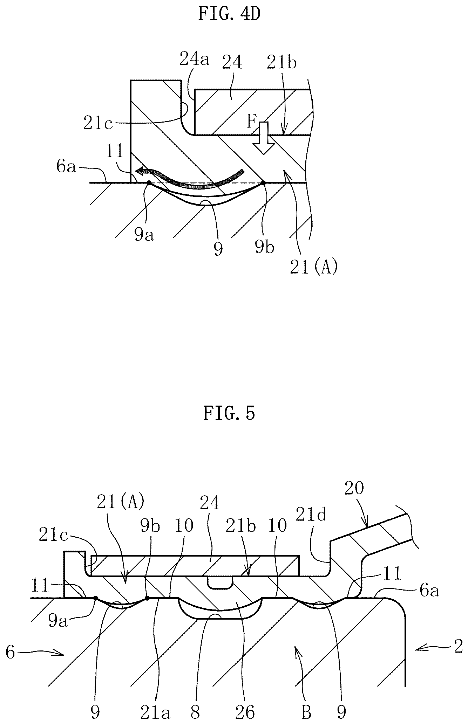

In addition, as illustrated in FIG. 3 and the like, on the outer peripheral surface 6a of the boot target fixing portion B of the cup portion 6, two second annular grooves 9 are provided so as to be arranged on both sides in the axial direction of the first annular groove 8, and the one end 9a and the other end 9b in the groove width direction of each of the second annular grooves 9 are arranged outside and within the range of the band width Wa of the boot band 24, respectively. Therefore, a part of the thickness of the large-diameter cylindrical portion 21 flowing with tightening of the boot band 24 can be released to the outside in the band width direction of the boot band 24 (see black arrow in FIG. 4D). As a result, since the reaction force (elastic restoring force) generated in the large-diameter cylindrical portion 21 of the boot 20 along with the tightening of the boot band 24 can be reduced, the tightening property of the boot band 24 can be further enhanced.

With the tightening of the boot band 24, as illustrated in FIG. 4D, when a tightening force F for radially reducing and deforming the large-diameter cylindrical portion 21 of the boot 20 is applied, the inner peripheral surface 21a of the large-diameter cylindrical portion 21 of the boot 20 is strongly pressed against the outer peripheral surface 6a of the boot target fixing portion B of the cup portion 6. Therefore, in addition to the annular protrusion 10 pressed against the inner peripheral surface 21a of the large-diameter cylindrical portion 21 fitting into the large-diameter cylindrical portion 21, the thickness of a part of the thickness of the large-diameter cylindrical portion 21 (portion facing second annular groove 9) enters the second annular groove 9, and a bulge (raised portion) capable of engaging with the second annular groove 9 in the axial direction is formed in the large-diameter cylindrical portion 21 as illustrated in FIGS. 3 and 4D. As described above, when the boot band 24 is tightened, a recess-projection fitting portion for axially engaging the large-diameter cylindrical portion 21 (fixing portion A) of the boot 20 and the boot target fixing portion B of the cup portion 6 is formed between the large-diameter cylindrical portion 21 of the boot 20 and the boot target fixing portion B of the cup portion 6, so that the pull-out strength of the large-diameter cylindrical portion 21 of the boot 20 can be enhanced.

Note that when the thickness of the large-diameter cylindrical portion 21 of the boot 20 comes into contact with the groove bottoms of the first annular groove 8 and the second annular groove 9 at the time of tightening the boot band 24, the reaction force generated in the large-diameter cylindrical portion 21 increases with the tightening of the boot band 24, and the tightening property of the boot band 24 deteriorates. Therefore, the groove depths (volumes) of the first annular groove 8 and the second annular groove 9 are set such that the thickness of the large-diameter cylindrical portion 21 does not come into contact with the groove bottoms of the first annular groove 8 and the second annular groove 9 at the time of and after tightening of the boot band 24. Therefore, after tightening the boot band 24, as illustrated in FIG. 3, there is a gap between the groove bottoms of the first annular groove 8 and the second annular groove 9 and the large-diameter cylindrical portion 21 of the boot 20.

In a case where the cup portion 6 is provided with the first annular groove 8 and the two second annular grooves 9 arranged on both sides in the axial direction thereof, there is a concern that the strength of the cup portion 6 may decrease as the wall thickness (volume) of the cup portion 6 decreases as compared with a case where the annular grooves 8 and 9 are not provided. In this regard, as illustrated in FIG. 2, a portion of the cup portion 6 that is shifted to the other side in the axial direction (opening side of cup portion 6) from a portion on an axis orthogonal plane P passing through a joint center O that is the thinnest portion and is thicker than the thinnest portion is set as the boot target fixing portion B, and the first annular groove 8 and the second annular groove 9 are provided in the boot target fixing portion B, so that adverse effects on the strength of the cup portion 6 due to the volume reduction of the cup portion 6 are suppressed.

Meanwhile, in the embodiment described above, as illustrated in FIGS. 3, 4C, and the like, the one end 9a and the other end 9b of each second annular groove 9 in the groove width direction are arranged outside and within the range of the band width Wa of the boot band 24, respectively, and are arranged outside and within the range of the band width Wb of the band groove 21b accommodating the boot band 24, respectively. Unlike such a configuration, if both of the one end 9a and the other end 9b of one of the two second annular grooves 9 (second annular groove 9 on left side of the drawing in FIG. 5) are located within the range of the groove width Wb of the band groove 21b (further, within range of band width Wa of boot band 24) as illustrated in FIG. 5, the tightening force of the boot band 24 directly acts on the support portion 11 on the left side of the drawing in FIG. 5 and the two annular protrusions 10, but does not act on the support portion 11 on the right side of the drawing. In this case, since the contact surface pressure between the inner peripheral surface 21a of the large-diameter cylindrical portion 21 of the boot 20 and the outer peripheral surface 6a of the cup portion 6 becomes non-uniform in the axial direction, there is a possibility that a desired sealing property cannot be secured.

Therefore, as illustrated in FIG. 3, when the second annular groove 9 is provided between the annular protrusion 10 and the support portion 11 in the axial direction on the outer peripheral surface 6a of the boot target fixing portion B of the cup portion 6, it is preferable that one end 9a and the other end 9b of the (each) second annular groove 9 in the groove width direction be disposed outside and within the range of the band width Wa of the boot band 24, and be disposed outside and within the range of the band width Wb of the band groove 21b accommodating the boot band 24. As a result, the inner peripheral surface 21a of the large-diameter cylindrical portion 21 of the boot 20 and the outer peripheral surface 6a of the cup portion 6 can be appropriately brought into contact with each other, and a desired sealing property can be secured.

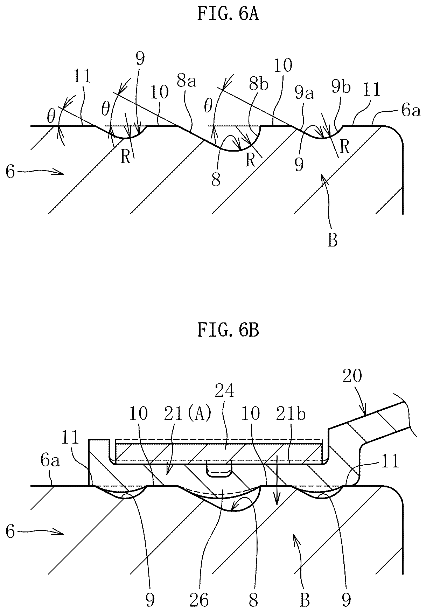

FIG. 6A is a partially enlarged cross-sectional view of a boot target fixing portion of an outer joint member in a boot attachment structure according to another embodiment of the present invention, and FIG. 6B is a diagram illustrating a state in which a fixing portion of a boot disposed on the outer periphery of the boot target fixing portion illustrated in FIG. 6A is tightened by a boot band. In this embodiment, the cross-sectional shapes of a first annular groove 8 and a second annular groove 9 provided in a boot target fixing portion B of a cup portion 6 of an outer joint member 2 are different from those of the embodiment described above.

Specifically, the first annular groove 8 is formed by an inclined surface 8a inclined at an angle θ with respect to the axial direction (outer peripheral surface 6a of cup portion 6) and an arcuate surface 8b which is disposed adjacent to the other side in the axial direction of the inclined surface 8a and has a curvature radius R connecting the small-diameter side end of the inclined surface 8a and the outer peripheral surface 6a of the cup portion 6. In addition, the second annular groove 9 is formed by an inclined surface 9a inclined at an angle θ with respect to the axial direction similarly to the inclined surface 8a forming the first annular groove 8, and an arcuate surface 9b disposed so as to connect the small-diameter side end of the inclined surface 9a and the outer peripheral surface 6a of the cup portion 6 and having a radius of curvature equal to the radius of curvature R of the arcuate surface 8b. The inclination angle θ of the inclined surfaces 8a and 9a is set to 25° or more and 30° or less.

The first annular groove 8 and the second annular groove 9 are formed by turning the outer peripheral surface 6a of the boot target attachment portion B of the cup portion 6, and the cross-sectional shapes of both the annular grooves 8 and 9 are shapes corresponding to the cross-sectional shape of the turning chip. Specifically, the arcuate surfaces 8b and 9b are arcuate surfaces corresponding to the round shape of the nose of the turning chip, and the inclined surfaces 8a and 9a are inclined surfaces corresponding to the inclination of the turning chip.

Then, since the arrangement of the inclined surface 8a and the arcuate surface 8b constituting the first annular groove 8 is the same as the arrangement of the inclined surface 9a and the arcuate surface 9b constituting the second annular groove 9, for example, the turning process for forming the annular grooves 8 and 9 is performed such that the turning chip in an inclined posture inclined at a predetermined angle with respect to the outer peripheral surface 6a of the cup portion 6 is moved stepwise from the bottom side (one side in axial direction) of the cup portion 6 to the opening side (other side in axial direction) of the cup portion 6, and the annular grooves 8 and 9 are formed in the order of the second annular groove 9 on one side in the axial direction, the first annular groove 8, and the second annular groove 9 on the other side in the axial direction. Accordingly, the shapes of the annular grooves 8 and 9 of the present embodiment are excellent in turning processability, and are advantageous in suppressing an increase in cost of the constant velocity universal joint 1.

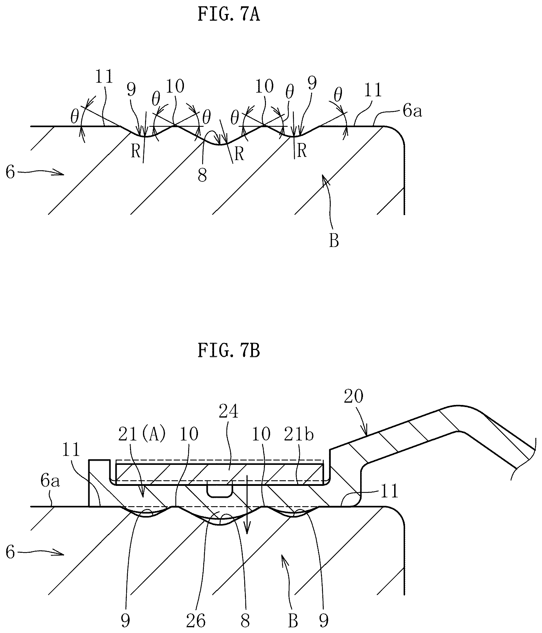

FIG. 7A is a partially enlarged cross-sectional view of a boot target fixing portion of an outer joint member in a boot attachment structure according to another embodiment of the present invention, and FIG. 7B is a diagram illustrating a state in which a fixing portion of a boot disposed on the outer periphery of the boot target fixing portion illustrated in FIG. 7A is tightened by a boot band. In this embodiment, the cross-sectional shapes of a first annular groove 8 and a second annular groove 9 provided in a boot target fixing portion B of a cup portion 6 are changed from those illustrated in FIG. 6.

Specifically, each of the first annular groove 8 and the second annular groove 9 is formed in a V-shape (V-shape that is plane-symmetrical on axis orthogonal plane passing through central portion of annular groove in groove width direction) formed by a pair of inclined surfaces inclined at an angle θ in directions opposite to each other with respect to the axial direction and an arcuate surface having a curvature radius R that smoothly connects the small-diameter side end portions of both inclined surfaces to each other. The inclination angle θ of the inclined surface is set to 25° or more and 30° or less as in the embodiment illustrated in FIG. 6 and the like.

Both the annular grooves 8 and 9 are formed by turning an outer peripheral surface 6a of the boot target attachment portion B of the cup portion 6, and the cross-sectional shape of both the annular grooves 8 and 9 corresponds to the cross-sectional shape of the turning chip. That is, the arcuate surface is an arcuate surface corresponding to the round shape of the nose of the turning chip, and the inclined surface is an inclined surface corresponding to the inclination of the turning chip. In this case, for example, the turning processing for forming the annular grooves 8 and 9 is performed such that the turning chip is moved stepwise from the bottom side to the opening side of the cup portion 6 or from the opening side to the bottom side of the cup portion 6, and the annular grooves 8 and 9 are formed in the arrangement order of the annular grooves 8 and 9 in the axial direction, that is, in the order of one second annular groove 9, the first annular groove 8, and the other second annular groove 9.

Accordingly, the annular grooves 8 and 9 of the present embodiment are even more excellent in turning processability. Therefore, it is possible to increase the degree of freedom in designing the turning step performed in the manufacturing process of the outer joint member 2, and it is possible to contribute to shortening the cycle time of the turning step and to reducing the turning cost.

The embodiment illustrated in FIGS. 6 and 7 also adopt the same configuration as that of the embodiment illustrated in FIG. 3. That is, in the embodiment illustrated in FIGS. 6 and 7, too,
· the outer peripheral surface 6a of the boot target fixing portion B of the cup portion 6 is provided with a support portion 11 that comes into contact with and supports the inner peripheral surface 21a of the large-diameter cylindrical portion 21 (fixing portion A) of the boot 20 outside the range of the band width Wa of the boot band 24, and the support portions 11 are provided on both sides of the boot band 24, and
· On the outer peripheral surface 6a of the boot target fixing portion B of the cup portion 6, a first annular groove 8 and two second annular grooves 9 arranged on both sides of the first annular groove 8 in the axial direction are provided at intervals in the axial direction, and each second annular groove 9 is provided such that one end 9a in the groove width direction is arranged outside the range of the band width Wa of the boot band 24 and the other end 9b in the groove width direction is arranged within the range of the band width Wa of the boot band 24. Therefore, also in the boot attachment structure according to this embodiment, it is possible to obtain the same operational effects (advantages) as those of the boot attachment structure of the first embodiment described above.

The boot attachment structure (constant velocity universal joint 1 adopting the boot attachment structure) according to the embodiment of the present invention described above can be appropriately modified without departing from the gist of the present invention.

For example, in the embodiment described above, as illustrated in FIG. 4A, the support portion 11 provided in the boot target fixing portion B of the cup portion 6 is disposed at the same radial position as the outer diameter end of the annular protrusion 10 (outer diameter of support portion 11 is the same diameter as outer diameter Db of annular protrusion 10). However, the support portion 11 may be disposed slightly radially outward or radially inward of the outer diameter end of the annular protrusion 10. That is, the support portion 11 only needs to be provided so as to come into contact with and support (ends on one side and the other side in axial direction of) the inner peripheral surface 21a of the large-diameter cylindrical portion 21 of the boot 20 after tightening the boot band 24, and need not be in contact with the inner peripheral surface 21a of the large-diameter cylindrical portion 21 at a stage where the large-diameter cylindrical portion 21 of the boot 20 is disposed on the outer periphery of the boot target fixing portion B (e.g., stage illustrated in FIG. 4B) or while the large-diameter cylindrical portion 21 is being tightened by the boot band 24.

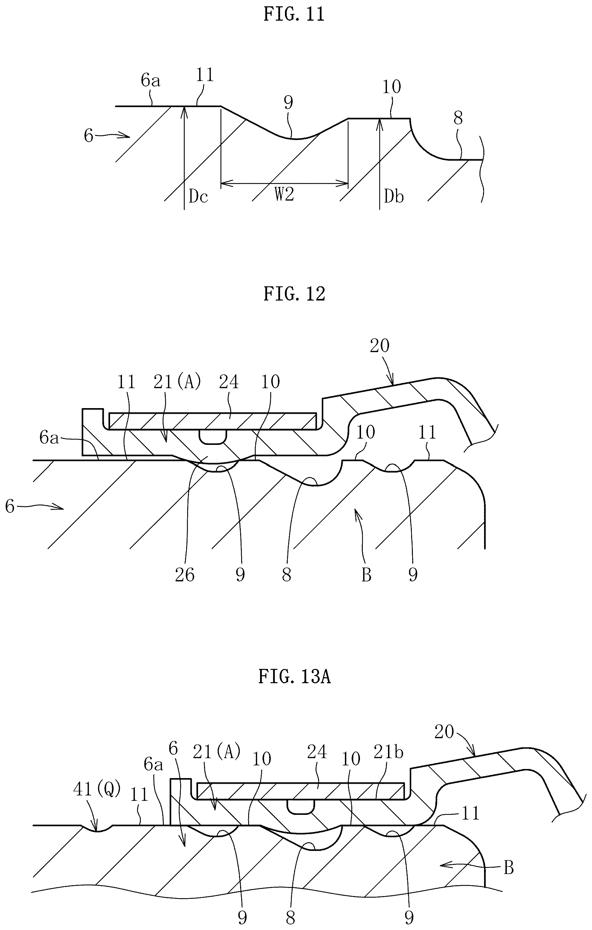

A specific example in which an outer diameter Dc of the support portion 11 is made different from the outer diameter Db of the annular protrusion 10 is illustrated in an enlarged manner in FIG. 11. In FIG. 11, the outer diameter Dc of the support portion 11 is set to be slightly larger than the outer diameter Db of the annular protrusion 10. Specifically, the outer diameter Dc of the support portion 11 is set to be larger than the outer diameter Db of the annular protrusion 10 within a range of 0.01 mm or more and 0.3 mm or less. That is, in the present embodiment, the relational expression of 0.01 mm ≤ (Dc-Db) ≤ 0.3 mm is satisfied. As described above, if the outer diameter Dc of the support portion 11 is made slightly larger than the outer diameter Db of the annular protrusion 10, when a plurality of the outer joint members 2 (outer joint members 2 to which boot 20 is not attached) provided with the annular protrusion 10 and the like are transported together, the possibility of the annular protrusions 10 of two adjacent outer joint members 2 coming into contact with each other and a defect such as a scratch occurring in the annular protrusion 10 can be reduced.

In the embodiment described above, as illustrated in FIG. 4A, the relational expression of W2 < W < W1 is satisfied between the axial width W of the annular projection 26 provided in the large-diameter cylindrical portion 21 of the boot 20 as the fixing portion A and the groove width W1 of the first annular groove 8 and the groove width W2 of the second annular groove 9 provided in the boot target fixing portion B of the cup portion 6. Therefore, when the large-diameter cylindrical portion 21 of the boot 20 is disposed on the outer periphery of the boot target fixing portion B of the cup portion 6, although the entire annular projection 26 can be prevented from being fitted into the second annular groove 9, as illustrated in FIG. 12, a part of the leading end side of the annular projection 26 may be fitted into the second annular groove 9, and the large-diameter cylindrical portion 21 of the boot 20 may be positioned at an incorrect axial position with respect to the boot target fixing portion B.

Therefore, the boot target fixing portion B may be provided with a mark Q as illustrated in each of FIGS. 13A to 13D. The mark Q is a portion where it can be visually determined that the fixing portion A of the boot 20 is correctly positioned in the axial direction with respect to the boot target fixing portion B, and it is important to provide the mark Q on the axially outer side (here, the bottom side of cup portion 6) of the proper attachment position of the fixing portion A in the boot target fixing portion B.

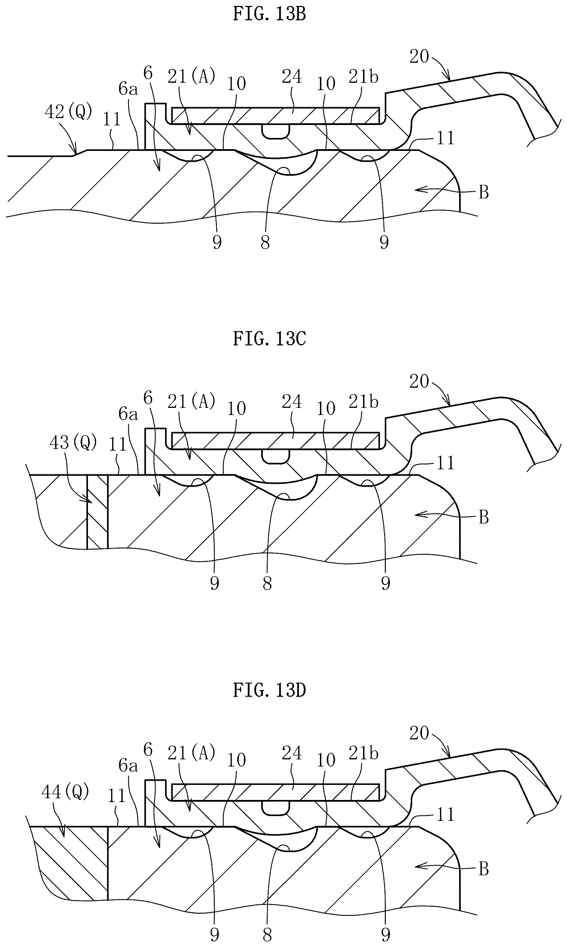

Note that FIG. 13A is an example of a case where the above-described mark Q is configured by an annular groove 41 provided on the outer peripheral surface 6a of the cup portion 6, FIG. 13B is an example of a case where the mark Q is configured by a stepped surface 42 provided on the cup portion 6, FIG. 13C is an example of a case where the mark Q is configured by a rough surface portion (portion formed on rougher surface than other portions) 43 provided on the outer peripheral surface 6a of the cup portion 6, and FIG. 13D is an example of a case where the mark Q is configured by a colored portion (portion colored differently from other portions) 44 formed on the outer peripheral surface 6a of the cup portion 6. As the mark Q, a mark other than the annular groove 41, the stepped surface 42, the rough surface portion 43, and the colored portion 44 described above can also be adopted.

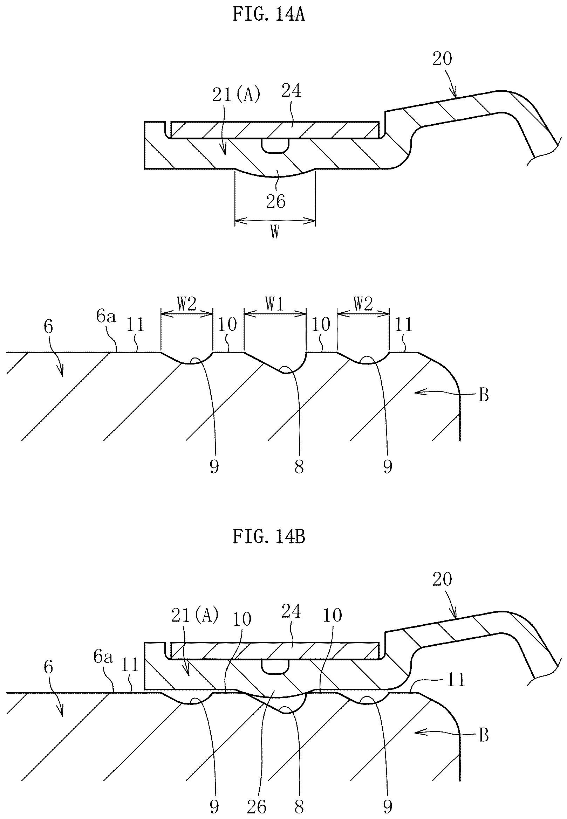

In the embodiment described above, as illustrated in FIG. 4A, in order to perform relative positioning in the axial direction of the large-diameter cylindrical portion 21 (fixing portion A) of the boot 20 with respect to the cup portion 6 (boot target fixing portion B) of the outer joint member 2 with high accuracy, the relational expression of W2 < W < W1 is satisfied between the axial width W of the annular projection 26 provided on the inner peripheral surface 21a of the large-diameter cylindrical portion 21 (axial width W of annular projection 26 before tightening boot band 24) and the groove width W1 of the first annular groove 8 and the groove width W2 of the second annular groove 9 provided in the boot target fixing portion B). However, the magnitude relationship between W and W1 in this relational expression may be reversed. That is, in the boot attachment structure according to the present invention, as illustrated in FIG. 14A, the widths W, W1, and W2 may be set so as to satisfy the relational expression of W2 < W1 < W.

In a case where such a configuration is adopted, as illustrated in FIG. 14B, when the large-diameter cylindrical portion 21 (fixing portion A) of the boot 20 is positioned in the axial direction with respect to the boot target fixing portion B of the cup portion 6 and then the large-diameter cylindrical portion 21 of the boot 20 is tightened with the boot band 24, the annular projection 26 of the boot 20 comes into line contact with the opening edge portion of the first annular groove 8 (end of annular protrusion 10 on first annular groove 8 side) at the initial stage of tightening of the boot band 24, so that the annular protrusion 10 of the cup portion 6 can be strongly bitten into the large-diameter cylindrical portion 21 (annular projection 26) of the boot 20. Therefore, the close contact force between the large-diameter cylindrical portion 21 (fixing portion A) of the boot 20 and the cup portion 6 (fixed portion B) of the outer joint member 2 can be increased, and the sealing property of the boot 20 can be enhanced. Although not illustrated, as tightening of the large-diameter cylindrical portion 21 by the boot band 24 progresses, the contact mode of the large-diameter cylindrical portion 21 (fixing portion A) of the boot 20 with respect to the boot target fixing portion B becomes substantially similar to that illustrated in FIG. 6B.

In the embodiment described above, the second annular groove 9 is provided on both sides in the axial direction of the first annular groove 8, but the second annular groove 9 may be provided only on one side or the other side in the axial direction of the first annular groove 8. That is, the second annular groove 9 only needs to be provided on at least one of one side and the other side in the axial direction of the first annular groove 8, and the number of the second annular grooves 9 to be installed is arbitrary. Note, however, that it is important that the second annular groove 9 allows the thickness of the fixing portion A (boot 20) flowing as the fixing portion A of the boot 20 is tightened with the boot band to efficiently enter, and is kept to such an extent that a decrease in strength accompanying a decrease in volume of the boot attachment target member does not cause a problem.

Moreover, the cross-sectional shapes of the first annular groove 8 and the second annular groove 9 are not limited to the shapes described in detail with reference to FIGS. 4A, 6A, and 7A, and can be arbitrarily set. For example, various groove shapes such as a shape in which the inclined surface is disposed on the opposite side in the axial direction to FIG. 6A, a trapezoidal shape, a rectangular shape, and a round shape can be applied. Additionally, when a plurality of second annular grooves 9 are provided, the cross-sectional shapes thereof are not necessarily all the same, and may be different from each other. Note, however, that in consideration of processability, the cross-sectional shapes of the first annular groove 8 and the second annular groove 9 are preferably the same.

The boot attachment structure according to the present invention can also be applied to attaching and fixing the small-diameter cylindrical portion 22 to the large-diameter portion 16 (see FIG. 1) of the shaft member 15 as the boot target fixing portion B by tightening the small-diameter cylindrical portion 22 of the boot 20 as the fixing portion A with the boot band 25. In addition, the boot attachment structure according to the present invention can also be applied to a case where a so-called rubber boot is used as the boot 20 instead of the above-described so-called resin boot. The rubber boot is molded using, for example, a rubber material containing chloroprene rubber (CR), silicone rubber, or hydrogenated nitrile rubber (HNBR) as a main raw material.

In addition, the boot attachment structure according to the present invention can also be applied to a fixed type constant velocity universal joint other than the constant velocity universal joint (fixed type constant velocity universal joint) illustrated in FIG. 1, and a sliding type constant velocity universal joint that allows both axial displacement and angular displacement of two shafts to be connected. Examples of the sliding constant velocity universal joint include a double offset type (DOJ), a tripod type (TJ), and a cross groove type (LJ). In the sliding constant velocity universal joint, the cup portion of the outer joint member is formed in a bottomed cylindrical shape, and a linear outer track groove extending in the axial direction is formed on the inner peripheral surface of the cup portion.

### REFERENCE SIGNS LIST

- 1: Constant velocity universal joint
- 2: Outer joint member
- 3: Inner joint member
- 4: Ball
- 5: Cage
- 6: Cup portion
- 8: First annular groove
- 9: Second annular groove
- 10: Annular protrusion
- 11: Support portion
- 15: Shaft member
- 20: Boot (Constant-velocity universal joint boot)
- 21: Large-diameter cylindrical portion
- 21a: Inner peripheral surface
- 21b: Band groove
- 22: Small-diameter cylindrical portion
- 24, 25: Boot band
- 26: Annular projection
- A: Fixing portion
- B: Boot target fixing portion
- Q: Mark
- W: Axial width of annular projection
- W1: Groove width of first annular groove
- W2: Groove width of second annular groove

## Claims

1. An attachment structure for a constant-velocity universal joint boot in which an annular projection provided on an inner peripheral surface of a fixing portion of the constant-velocity universal joint boot formed in a cylindrical shape using an elastic material is fitted into a first annular groove provided on an outer peripheral surface of a boot target fixing portion of a boot attachment target member, and a band groove provided on an outer peripheral surface of the fixing portion is tightened with a boot band in a state where annular protrusions provided on both axial sides of the first annular groove in the outer peripheral surface of the boot target fixing portion are pressed against the inner peripheral surface of the fixing portion, to attach and fix the fixing portion to the boot target fixing portion,
wherein a support portion is provided on the outer peripheral surface of the boot target fixing portion, the support portion in contact with and supporting the inner peripheral surface of the fixing portion outside a band width range of the boot band, and the support portion is disposed on both axial sides of the boot band.

2. The constant-velocity universal joint boot according to claim 1, wherein a second annular groove disposed between the annular protrusion and the support portion is provided on the outer peripheral surface of the boot target fixing portion, and one end and the other end of the second annular groove in a groove width direction are disposed outside and within a band width range of the boot band, respectively.

3. The constant-velocity universal joint boot according to claim 1, wherein a second annular groove disposed between the annular protrusion and the support portion is provided on the outer peripheral surface of the boot target fixing portion, and one end and the other end of the second annular groove in a groove width direction are disposed outside and within a groove width range of the band groove, respectively.

4. The constant-velocity universal joint boot according to any one of claims 2 and 3, wherein a relational expression of W2 < W < W1 is satisfied where W is an axial width of the annular projection, W1 is a groove width of the first annular groove, and W2 is a groove width of the second annular groove in a state where the outer peripheral surface of the fixing portion is not tightened by the boot band.

5. The constant-velocity universal joint boot according to any one of claims 2 and 3, wherein a relational expression of W2 < W1 < W is satisfied where W is an axial width of the annular projection, W1 is a groove width of the first annular groove, and W2 is a groove width of the second annular groove in a state where the outer peripheral surface of the fixing portion is not tightened by the boot band.

6. The constant-velocity universal joint boot according to any one of claims 2 and 3, wherein the annular projection is not in contact with a groove bottom of the first annular groove, and the inner peripheral surface of the fixing portion is not in contact with a groove bottom of the second annular groove.

7. The constant-velocity universal joint boot according to any one of claims 1 to 3, wherein an outer diameter of the support portion is made larger than an outer diameter of the annular protrusion.

8. The constant-velocity universal joint boot according to any one of claims 1 to 3, wherein a second annular groove disposed between the annular protrusion and the support portion is provided on the outer peripheral surface of the boot target fixing portion, and at least one of the first annular groove and the second annular groove has a cross-sectional shape of a V-shape that is plane-symmetrical in an axis orthogonal plane passing through a central portion in a groove width direction.

9. The constant-velocity universal joint boot according to any one of claims 1 to 3, wherein the boot attachment target member is provided with a mark that enables visual determination of correct axial positioning of the fixing portion with respect to the boot target fixing portion.

10. The constant-velocity universal joint boot according to any one of claims 1 to 3, wherein the boot target fixing portion is provided on an outer joint member of the constant velocity universal joint.

11. The constant-velocity universal joint boot according to claim 10, wherein the outer joint member includes a cup portion in which a plurality of track grooves extending in an axial direction are formed on an inner peripheral surface, and the boot target fixing portion is provided at a position shifted toward an opening side from a joint center in the cup portion.

12. The constant-velocity universal joint boot according to any one of claims 1 to 3, wherein the boot target fixing portion is provided on a shaft member connected to an inner joint member of the constant velocity universal joint in a torque-transmittable manner.
